Europäisches Patentamt

(19) European Patent Office

Office européen des brevets

(11) Numéro de publication: **0 117 173**
**B1**

(12) # FASCICULE DE BREVET EUROPÉEN

(45) Date de publication du fascicule du brevet:
**13.08.86**

(51) Int. Cl.⁴: **C 09 D 1/10**

(21) Numéro de dépôt: **84400121.4**

(22) Date de dépôt: **20.01.84**

(54) Peinture-dispersion à la chaux et son procédé de préparation.

(30) Priorité: **28.01.83 FR 8301304**

(43) Date de publication de la demande:
**29.08.84 Bulletin 84/35**

(45) Mention de la délivrance du brevet:
**13.08.86 Bulletin 86/33**

(84) Etats contractants désignés:
**AT BE CH DE FR GB IT LI LU NL SE**

(56) Documents cité:
**US-A-3 947 397**

**CHEMICAL ABSTRACTS, vol. 90, no. 8, 19 février 1979, page 82, no. 56419u, Columbus, Ohio, US**
**TECHNISCHE RUNDSCHAU, vol. 73, no. 32, 4 aout 1981, pages 18-19, Bern, CH, G. FLORUS: "Wässrige Dispersionsfarben und Putze für aussen"**

(73) Titulaire: **RHONE- POULENC SPECIALITES CHIMIQUES, "Les Miroirs" 18, Avenue d'Alsace, F-92400 Courbevoie (FR)**

(72) Inventeur: **Arpin, René, 29, rue du Commandant Faurax, F-69006 - Lyon (FR)**

(74) Mandataire: **Fabre, Madeleine- France, RHONE- POULENC INTERSERVICES Service Brevets Chimie 25, quai Paul Doumer, F-92408 Courbevoie Cédex (FR)**

## Description

La présente invention a pour objet une peinture-dispersion à la chaux en milieu aqueux et son procédé de préparation.

Il est connu d'utiliser pour la préparation de peintures ou d'enduits à la chaux:

. un mélange sec obtenu par traitement, par un activateur, de chaux éteinte, de dolomie et d'adjuvants et pigments divers (Chemical Abstracts *90*, 56.419 u);
. des agents filmogènes organiques (Encyclopedia Ullmann, 8, page 338).

Il est connu de préparer des peintures à partir de polymères acryliques réticulables à froid en dispersion dans l'eau (Technische Rundschau, vol 73, n°32, 4 Août 1981, pages 18—19).

Le brevet américain n°3.947.397 décrit une composition aqueuse pigmentaire constituée d'une dispersion aqueuse d'un polymère acrylique thermodurcissable contenant notamment du D-sorbitol et des dichromates de zinc à l'état dissous.

Par contre, il n'existe pas commercialement de peinture en milieu aqueux contenant de la chaux en raison de la très mauvaise stabilité au stockage des mélanges aqueux contenant de la chaux.

Le but de la Demanderesse a été de trouver une peinture à la chaux en milieu aqueux stable au stockage et aux rayons ultra-violets et présentant également une bonne filmogénéité.

La peinture-dispersion à la chaux en milieu aqueux faisant l'objet de l'invention est une composition à base d'un liant, de matières pulvérulentes et d'adjuvants pour peinture aqueuse en dispersion, ladite composition étant caractérisée en ce que:

— le liant est constitué d'un copolymère filmogène d'acrylate d'alkyle et d'un monomère éthylénique non-ionogène en dispersion au sein d'un milieu aqueux stable à pH basique, ledit monomère éthylénique non ionogène étant tel que l'homopolymère correspondant audit monomère éthylénique non-ionogène présente un point de transition vitreuse compris entre 70 et 170°C;
— les matières pulvérulentes contiennent outre un ou des pigments, de la chaux aérienne éteinte présentant un faible indice d'hydraulicité;
— les adjuvants sont choisis parmi ceux qui sont stables à pH basique, et comprennent entre autres un agent stabilisant constitué par du D-sorbitol.

On entend par "peinture-dispersion" une dispersion de consistance fluide aussi bien qu'une dispersion de consistance pâteuse ou semi-fluide telle qu'un enduit.

Selon la Norme AFNOR T 30—001, on désigne par "matières pulvérulentes", les "substances solides, insolubles dans le milieu de suspension, finement divisées et dispersées dans ce milieu après mouillage." Dans le cas présent les matières pulvérulentes sont constituées par ou les pigments et la chaux pour une dispersion fluide et en outre par des matières de charges telles que des carbonates pour une dispersion semi-fluide ou pâteuse.

Toujours selon la Norme AFNOR T 30—001, on désigne par "adjuvants", "les substances éventuellement incorporées à faible dose dans les liants, vernis, peintures et, le cas échéant, enduits pour y développer certaines qualités propres à en améliorer, soit les conditions de fabrication ou/et de conservation ou/et d'application, soit certaines propriétés spécifiques."

Dans le cas présent les adjuvants sont entre autres des agents dispersants, épaississants, stabilisants, anti-mousse, anti-gel, de coalescence, fongicides...

Le copolymère filmogène entrant dans la composition du liant est obtenu à partir d'un acrylate d'alkyle et d'un monomère éthylénique non ionogène.

Parmi les monomères éthyléniques non-ionogènes on peut citer les monomères vinylaromatiques tels que le styrène, les méthylstyrènes, les vinyltoluènes; les méthacrylates d'alkyle tels que le méthacrylate de méthyle; l'acrylonitrile.

Les acrylates d'alkyle pouvant être mis en oeuvre sont ceux dont l'homopolymère correspondant présente un point de transition vitreuse compris entre +10°C et −60°C.

On peut citer les acrylates d'alkyle dont le groupe alkyle contient de 1 à 8 atomes de carbone et de préférence de 1 à 4 atomes de carbone.

Les quantités respectives de monomère éthylénique non-ionogène et d'acrylate d'alkyle à mettre en oeuvre sont choisies de telle manière que le copolymère obtenu présente un point de transition vitreuse compris entre −5°C et +25°C.

Les quantités de monomères à utiliser sont fonction de la nature desdits comonomères et de la température de transition vitreuse du copolymère désirée. Lesdites quantités peuvent être facilement déterminées en appliquant par exemple la formule de FOX donnée dans Bull. An. Phys. Soc. 1956, *1*, 123.

Ainsi:
— un copolymère styrène-acrylate d'éthyle présente un point de transition vitreuse variant entre 0°C et 20°C lorsque le rapport styrène/acrylate d'éthyle varie entre 26/74 et 45/55;
— un copolymère styrène-acrylate de propyle présente un point de transition vitreuse variant entre 0°C et 20°C lorsque le rapport styrène/acrylate de propyle varie de 36/64 à 52/48;

2

le polystyrène présentant un point de transition vitreuse de +100°C, le polyacrylate d'éthyle de −24°C et le polyacrylate de propyle de −37°C.

Les valeurs de points de transition vitreuse indiquées sont celles mesurées selon la méthode dite "Differential scanning calorimetry" décrite par exemple par A. Lambert dans "Polymer *10*, 319, 1969."

Les dispersions aqueuses de copolymères de monomère éthylénique non ionogène et d'acrylate d'alkyle sont obtenues par polymérisation en émulsion aqueuse desdits monomères éventuellement en mélange avec un monomère stabilisant au sein d'un milieu stable à pH alcalin.

Ledit milieu de polymérisation comprend outre lesdits monomères, une phase aqueuse et divers adjuvants classiques de polymérisation en émulsion (catalyseurs, émulsifiants...) ces derniers étant choisis parmi ceux qui sont stables en un milieu alcalin.

On peut citer comme exemple de catalyseurs: les hydroperoxydes organiques tels que ceux de cumène, diisopropylbenzène, paramenthane... les persulfates tels que ceux de sodium, potassium ou ammonium.

Parmi les émulsifiants pouvant être présents on peut citer les agents anioniques tels que: les sels d'acides gras, les alkylsulfates, alkylsulfonates, arylsulfates, arylsulfonates, alkylarylsulfates, alkylaryl-sulfonates, les sulfosuccinates, les alkylphosphates de métaux alcalins; les agents non-ioniques tels que les alcools gras polyéthoxylés, les alkylphénolpolyéthoxylés, les acides gras polyéthoxylés.

La dispersion aqueuse de copolymère de monomère éthylénique non-ionogène et d'acrylate d'alkyle pourra contenir de 20 à 60% en poids de matière sèche et de préférence de 40 à 55% en poids de matière sèche, avec un diamètre de particules compris entre 0,05 et 0,5 μm.

On entend par "chaux aérienne éteinte de fabie indice d'hydraulicité", une chaux grasse obtenue par cuisson de roche calcaire suivie d'une extinction à l'eau et présentant un indice d'hydraulicité de préférence inférieur à 0,015.

L'indice d'hydraulicité i de la chaux est donné par le rapport des éléments les plus acides aux éléments les plus basiques:

$$i = \frac{SiO_2 + Al_2O_3 + Fe_2O_3}{CaO + MgO}$$

On a constaté qu'une chaux aérienne éteinte présentant un indice d'hydraulicité de l'ordre de 0,007 est tout particulièrement performante.

Selon l'invention la chaux peut être mise en oeuvre soit sous forme pulvérulente soit en dispersion dans l'eau.

Le D-sorbitol peut être mis en oeuvre soit à l'état pur soit sous forme d'une solution aqueuse à une concentration quelconque.

Les quantités des différents composants de la peinture-dispersion à la chaux faisant l'objet de l'invention sont telles que la concentration pigmentaire volumique (CPV), c'est-à-dire le rapport du volume des matières pulvérulentes (soit pigment(s)+chaux+éventuellement matières de charges) contenues dans la peinture à celui de l'extrait-sec correspondant (soit extrait sec du liant+matières pulvérulentes sèches+adjuvants secs), est de l'ordre de 15—80% et de préférence de l'ordre de 40—70%.

Selon l'invention, la peinture-dispersion à la chaux pourra favorablement contenir:

— de 10 à 850%, de préférence de 40 à 320% en poids de chaux par rapport au poids d'extrait sec de liant;
— de 0,1 à 2%, de préférence de 0,5 à 1,5% en poids de D-sorbitol par rapport au poids de chaux;
— de 45 à 85% en poids d'extrait sec (soit extrait sec du liant+matières pulvérulentes sèches+adjuvants secs) par rapport au poids de peinture-dispersion, ledit poids d'extrait sec étant favorablement de 45—65% pour une peinture fluide et de 65—85% pour un enduit.

Parmi les pigments pouvant être présents on peut citer notamment le dioxyde de titane du type rutile ou anatase.

La quantité de pigments à mettre en oeuvre est fonction du type de peinture désiré. Ladite quantité de pigment pourra varier de 10 à 90% par rapport au poids de matières pulvérulentes selon sil s'agit de préparer une peinture mate ou une peinture brillante.

Parmi les agents dispersants usuels stables à pH basique pouvant être présents on peut citer tout particulièrement les polyacrylates alcalins tels que ceux de sodium. Ceux-ci peuvent être mis en oeuvre en quantité de l'ordre de 0,15—2% en poids de matière sèche par rapport au poids total de la peinture.

Parmi les agents épaississants usuels stables à pH basique pouvant être présents on peut citer les polyuréthanes hydrosolubles non-ioniques en solution aqueuse. Ceux-ci peuvent être mis en oeuvre en quantité de l'ordre de 0,15% en poids de matière sèche par rapport au poids total de la peinture.

La peinture-dispersion à la chaux faisant l'objet de l'invention peut également contenir éventuellement:

— des agents coalescents tels que l'éther monobutylique de l'éthylèneglycol ou du diéthylèneglycol, l'éther phénylique de l'éthylèneglycol, du propylèneglycol ou dipropylèneglycol ou des produits du type "white-spirit" possédant une faible teneur en composés aromatiques en vue de diminuer si nécessaire la température minimale de formation de film du liant (par exemple jusqu'à une température inférieur ou égale à 0°C) selon une quantité allant de 3 à 4 parties en poids pour 100 parties de liant;

— des agents anti-mousse par exemple du type huile diméthylpolysiloxanique en vue d'éviter la formation éventuelle de mousse consécutive à une agitation mécanique;

— des agents anti-gel tels que les alcools, les alcanediols (propane diol-1,2, diéthylèneglycol), les polyéthylèneglycols selon une quantité pouvant atteindre 10% du poids de la peinture.

La présente invention a également pour objet le procédé de préparation de la peinture-dispersion à la chaux ci-dessus décrite.

Ladite peinture-dispersion à la chaux peut être obtenue par mélange sous agitation de ses différents constituants selon les quantités ci-dessus indiquées selon les règles de l'homme de l'art.

D'une manière préférentielle, ladite peinture-dispersion à la chaux peut être réalisée par incorporation d'une pâte pigmentaire constituée de pigment dispersé en milieu aqueux ou hydroalcoolique, à un mélange constitué de chaux aérienne éteinte de faible indice d'hydraulicité dispersée au sein d'un milieu contenant de l'eau, du D-sorbitol et le liant; elle peut aussi être réalisée par incorporation à la pâte pigmentaire préalablement préparée, des divers additifs, du liant et de la chaux une l'on disperse au sein dudit milieu.

La mise en dispersion du pigment, ainsi que celle de la chaux sont favorisées par l'emploi d'un agent dispersant tel que décrit ci-dessus.

La peinture-dispersion faisant l'objet de l'invention est stable au stockage sans évolution notable de sa viscosité au cours du temps.

Elle est facilement applicable sur des subjectiles tels que ceux à base de liants hydrauliques, de plâtre, de bois et agglomérés de bois par les procédés conventionnels (rouleau, pistolet pneumatique, pinceau...).

Après sèchage, la peinture forme un film présentant de bonnes propriétés notamment d'adhérence à sec et de résistance à l'abrasion humide.

En outre il a été constaté que la peinture faisant l'objet de l'invention présentant un pH au moins égal à 12 et étant filmogène (la coalescence s'effectuant par départ d'eau), n'est sensible ni à un excès de basicité ni à un excès d'eau. De ce fait celle-ci peut être appliquée sur un subjectile à base de liant hydraulique très rapidement après décoffrage dudit subjectile (après 2 ou 3 jours par exemple).

Ceci est un avantage particulièrement important puisqu'il est généralement admis de n'enduire ou de ne peindre les subjectiles à base de liants hydrauliques que lorsque leur taux d'humidité est inférieur à 5% et leur pH inférieur à 12, ce qui nécessite généralement une attente d'un mois environ après décoffrage.

Les exemples suivants sont donnés à titre indicatif et ne peuvent être considérés comme une limite du domaine et de l'espirit de l'invention.

Exemple 1
— Mélange et dispersion de la chaux
On mélange dans un disperseur pour peinture de 20 litres:

. 255 parties en poids d'une dispersion aqueuse de copolymère styrène-acrylate de butyle présentant les caractéristiques suivantes:

| | |
|---|---|
| . rapport pondéral styrène/acrylate de butyle | :50/50 environ |
| . quantité d'extrait sec | :environ 50% |
| . émulsifiants | :alkylsulfonate de sodium et alkylphénol oxyéthyléné |
| . catalyseur | :persulfate d'ammonium |
| . diamètre des grains | :entre 0,05 et 0,40 µm |
| . température minimale de formation de film | :16°C |
| . viscosité (mesurée à 20°C au viscosimètre Brookfield à 50 t/mn) | :50 m.Pa.s |

. 37 parties de propane diol-1,2
. 150 parties d'eau
. 5 parties d'une solution aqueuse à 70% en poids de D-sorbitol
. 5,5 parties de COATEX BR/3 comme agent dispersant (sel de copolymère acrylique en solution aqueuse) commercialisé par la Société COATEX.

. 6 parties de NAPSOL PPH$_2$ comme agent de coalescence (éther phénylique du dipropylèneglycol) commercialisé par B.P. Chimie;
. 4 parties de white-spirit;
. 315 parties de chaux aérienne éteinte présentant les caractéristiques suivantes:

| | |
|---|---|
| — indice d'hydraulicité | :0,0072 |
| — viscosité à 20°C et 750 g/l | :0,5 poises |
| — granulométrie moyenne | :7 µm |
| — refus au tamis | :4,28% |

— Pâte pigmentaire

On prépare d'une manière conventionnelle une pâte pigmentaire dont les composants sont les suivants:

. 13 parties de propane diol-1,2
. 6,5 parties d'eau
. 1,5 parties d'agent dispersant COATEX BR/3
. 2 parties d'agent anti-mousse NOPCO 8034 commercialisé par DIAMOND SHAMROCK
. 60 parties d'oxyde de titane RL 68 commercialisé par THANN et MULHOUSE

La pâte pigmentaire est alors incorporée à la dispersion de chaux.
La peinture obtenue présente les caractéristiques suivantes:

| | |
|---|---|
| — extrait sec | :60% environ |
| — P/L (pigment/liant sec en poids) | :2,94/l |
| — CPV | :55% environ |
| — viscosité Brookfield RVT (2,5 t/mn) | |
| . initiale | :8400 m.Pa.s |
| . après 500 h à 20°C | :8000 m.Pa.s |
| . après 500 h à 40°C | :10000 m.Pa.s |
| — viscosité Brookfield RVT (50 t/mn) | |
| . initiale | :2200 m.Pa.s |
| . après 500 h à 20°C | :2100 m.Pa.s |
| . après 500 h à 40°C | :3500 m.Pa.s |

— résistance à l'arrachement sec

Ce test es réalisé à l'aide d'un ruban adhésif de 2 cm de largeur (adhésivité conforme à la Norme NFT 30.038) appliqué d'une manière uniforme sur une même largeur de feuil (préalablement incisé jusqu'au support) puis arraché d'un mouvement rapide et continu.

| | |
|---|---|
| — 3 subjectiles | :bois, fibro-ciment, verre |
| — Epaisseur des feuils de peinture | :15 et 30 microns |
| — Résultats | :aucun arrachage sur les trois subjectiles, que le feuil soit épais de 15 microns ou de 30 microns. |

— résistance à l'abrasion humide

L'essai est réalisé à l'aide d'un abrasimètre présentant une charge de 1000 g.

| | |
|---|---|
| — subjectile | :fibro-ciment |

**0 117 173**

| | |
|---|---|
| — résultat | :bon pour un feuil de 15 microns et pour un feuil de 30 microns. |

On considère le résultat comme "bon" lorsque le taux d'usure est inférieur à 50% après environ 10.000 à 20.000 passages.

— essai de pliage
Evaluation de la "souplesse" des feuils selon le principe de la norme NFT 30.040

| | |
|---|---|
| — subjectile | :polyéthylène |
| — diamètre du mandrin | :1 cm |
| — durée du mouvement | :10 secondes |
| — résultat | :aucune craquelure pour un feuil de 15 microns<br>:aucune craquelure pour un feuil de 30 microns |

Exemple 2
On prépare comme à l'exemple 1 une peinture à partir:

— d'une dispersion de chaux obtenue par mélange de:

. 100 parties du liant styrène-acrylate de butyle utilisé à l'exemple 1;
. 2 parties de NAPSOL PPH₁ (éther phénylique de monopropylène glycol) commercialisé par BP Chimie;
. 1,5 parties de white spirit;
. 100 parties d'eau
. 1,5 parties de solution aqueuse à 70% de D-sorbitol;
. 1,7 parties de COATEX BR/3
. 135 parties de la chaux utilisée à l'exemple 1.

— et d'une pâte pigmentaire obtenue par mélange de:

. 6 parties de propane diol-1,2
. 3 parties d'eau
. 0,9 parties d'antimousse NOPCO 8034
. 0,7 parties de COATEX BR/3
. 27 parties d'oxyde de titane RL 68

La peinture obtenue présente les caractéristiques suivantes:

| | |
|---|---|
| — extrait sec | :57% environ |
| — P/L | :3,24/l |
| — CPV | :environ 57% |
| — viscosité Brookfield<br>à 20°C en m.Pa.s | |
| . à 2,5 t/mn | :9000 |
| . à 50 t/mn | :900 |

Exemple 3
On prépare comme à l'exemple 1 une peinture à partir:

— d'une dispersion de chaux obtenue par mélange de:

. 100 parties du liant styrène-acrylate de butyle utilisé à l'exemple 1
. 70 parties d'eau
. 2 parties de butyldiglycol
. 1,5 parties de white spirit

. 1 partie de solution aqueuse à 70% de D-sorbitol
. 1,5 parties de COATEX BR/3
. 100 parties de chaux utilisée à l'exemple 1.

— et d'une pate pigmentaire obtenue par mélange de:

. 5,8 parties de propane diol-1,2
. 3,2 parties d'eau
. 0,9 partie d'antimousse NOPCO 8034
. 0,7 partie de COATEX BR/3
. 27 parties d'oxyde de titane RL 68

L peinture obtenue présente les caractéristiques suivantes:

| | |
|---|---|
| — extrait sec | :57% environ |
| — P/L | :2,54/l |
| — CPV | :50,5% environ |
| — viscosité Brookfield à 20°C en m.Pa.s | |
| . à 2,5 t/mn | :8000 |
| . à 50 t/mn | :800 |

Exemple 4

On mélange dans un disperseur pour peinture:

. 230 parties d'eau
. 50 parties de propane diol-1,2
: 5 parties de solution aqueuse à 70% de D-sorbitol
. 8 parties de COATEX BR/3
. 60 parties de liant styrène-acrylate de butyle utilisé à l'exemple 1.
. 5 parties de la chaux utilisée à l'exemple 1
. 2 parties de NOPCO 8034
. 60 parties d'oxyde de titane RL 68
. 345 parties de la chaux utilisée à l'exemple 1.

Le mélange est ensuite agité pendant 20 minutes.
La formulation obtenue est ensuite ajustée par addition de:

. 165 parties du liant styrène-acrylate de butyle utilisé à l'exemple 1
. 6 parties de NAPSOL PPH$_2$
. 3 parties de white-spirit
. 3 parties d'agent épaississant COATEX BR/100 (contenant 10% de polyuréthane hydrosoluble non ionique) commercialisé par COATEX.

La peinture obtenue présente les caractéristiques suivantes:

| | |
|---|---|
| — extrait sec | :57% environ |
| — P/L | :3,65/l |
| — viscosité Brookfield à 20°C en m.Pa.s | |
| . à 2,5 t/mn | :10.000 |
| . à 50 t/mn | :1.880 |

Exemple 5

Préparation d'un enduit applicable en épaisseur de 1 à 2 mm.
On fabrique de manière conventionnelle une pâte pigmentaire de composition suivante:

. 3,1 parties de propane diol-1,2
. 1,55 parties d'eau

7

. 0,35 parti de coatex BR/3
. 0,47 partie d'antimousse Napco 8034
. 14,28 parties d'oxyde de titane RL 68

On incorpore ensuite sous agitation:

. 13,1 parties d'eau
. 8,33 parties de propane diol-1,2
. 0,71 partie de solution aqueuse à 70% de D-sorbitol
. 1,30 parties de Coatex BR/3
. 100 parties de dispersion styrène-acrylate de butyle à 50% d'extrait sec utilisée à l'exemple 1
. 4,76 parties de Napsol ppH$_2$
. 35,70 parties de chaux utilisée à l'exemple 1
. 23,80 parties de carbonate de calcium cristallisé de diamètre moyen 40 microns coupé à 100 microns
. 142,85 parties de carbonate de calcium cristallisé de 100 à 700 microns.

Caractéristiques de cet enduit

— Extrait sec      88%

— Rapport P/L      4,3//l

**Revendications**

1. Peinture-dispersion à la chaux en milieu aqueux à base d'un liant, de matières pulvérulentes et d'adjuvants pour peinture aqueuse en dispersion, ladite peinture-dispersion étant caractérisée en ce que:

. le liant est constitué d'un copolymère filmogène d'acrylate d'alkyle et d'un monomère éthylénique non-ionogène en dispersion au sein d'un milieu aqueux stable à pH basique, ledit monomère éthylénique non-ionogène étant tel que l'homopolymère correspondant audit monomère éthylénique non-ionogène présente un point de transition vitreuse compris entre 70 et 170°C;
. les matières pulvérulentes contiennent outre un ou des pigments, de la chaux aérienne éteinte présentant un faible indice d'hydraulicité;
. les adjuvants sont choisis parmi ceux qui sont stables à pH basique et comprennent entre autres un agent stabilisant constitué par du D-sorbitol.

2. Peinture-dispersion à la chaux selon la revendication 1 caractérisée en ce que l'acrylate d'alkyle est tel que l'homopolymère correspondant présente un point de transition vitreuse compris entre +10°C et −60°C.

3. Peinture-dispersion à la chaux selon la revendication 2, caractérisée en ce que l'acrylate d'alkyle présente un groupe alkyle contenant de 1 à 8 atomes de carbone.

4. Peinture-dispersion à la chaux selon la revendication 3, caractérisée en ce que l'acrylate d'alkyle présente un groupe alkyle contenant de 1 à 4 atomes de carbone.

5. Peinture-dispersion à la chaux selon l'une quelconque des revendications précédentes, caractérisée en ce que le monomère éthylénique non ionogène est un monomère vinylaromatique, un méthacrylate d'alkyle ou de l'acrylonitrile.

6. Peinture-dispersion à la chaux selon la revendication 5 caractérisée en ce que le monomère éthylénique non-ionogène est du styrène.

7. Peinture-dispersion à la chaux selon l'une quelconque des revendications précédentes caractérisée en ce que le copolymère d'acrylate d'alkyle et de monomère éthylénique non-ionogène présente un point de transition vitreuse compris entre −5°C et +25°C.

8. Peinture-dispersion à la chaux selon l'une quelconque des revendications précédentes caractérisée en ce que le liant contient de 20 à 60% en poids de matière sèche avec un diamètre de particules compris entre 0,05 et 0,5 micron.

9. Peinture-dispersion à la chaux selon l'une quelconque des revendications précédentes caractérisée en ce que la chaux aérienne présente un indice d'hydraulicité inférieur à 0,015.

10. Peinture-dispersion à la chaux selon la revendication 9 caractérisée en ce que la chaux aérienne présente un indice d'hydraulicité de 0,007.

11. Peinture-dispersion à la chaux selon l'une quelconque des revendications précédentes, caractérisée en ce que les quantités de ses différents composants sont telles que la concentration pigmentaire volumique est de 15 à 80%.

12. Peinture-dispersion à la chaux selon la revendication 11 caractérisée en ce que la concentration pigmentaire volumique est de 40 à 70%.

13. Peinture-dispersion à la chaux selon l'une quelconque des revendications précédentes caractérisée en ce qu'elle contient:

8

. de 10 à 850% en poids de chaux par rapport au poids d'extrait sec de liant;
. de 0,1 à 2% en poids de D-sorbitol par rapport au poids de chaux;
. de 45 à 85% en poids d'extrait sec.

14. Peinture-dispersion à la chaux selon la revendication 13 caractérisée en ce que le poids de chaux par rapport au poids d'extrait sec du liant est de 40 à 320% et le poids de D-sorbitol par rapport au poids de chaux est de 0,5 à 1,5%.

## Patentansprüche

1. Kalkanstrichdispersion im wässrigen Milieu auf Basis eines Bindemittels, von Pulverisierungsmitteln und von Hilfsmitteln für wässrige Dispersionsanstriche, wobei die Anstrichdispersion dadurch gekennzeichnet ist, daß

das Bindemittel aus einem filmbildenden Copolymeren von Alkylacrylat und einem nichtionogenen ethylenischen Monomeren besteht, das in einem stabilen wässrigen Milieu bei einem basischen pH-Wert dispergiert ist, wobei das nicht-ionogene ethylenische Monomer so beschaffen ist, daß das dem nicht-ionogene ethylenische Monomer entsprechende Homopolymer einen Glasübergangspunkt zwischen 70°C und 170°C besitzt;

die pulverisierenden Stoffe außerdem ein oder mehrere Pigmente enthalten, einen gelöschten Luftkalk mit einem geringen Hudraulizitätsindex und daß

die Hilfsstoffe unter denen ausgewählt sind, die bei basischem pH stabil sind und unter anderem ein Stabilisierungsmittel umfassen, das aus D-Sorbitol besteht.

2. Kalkanstrichdispersion nach Anspruch 1, dadurch gekennzeichnet, daß das Alkylacrylat so beschaffen ist, daß das entsprechende Homopolymere einen Glasübergangspunkt zwischen +10 und −60°C besitzt.

3. Kalkanstrichdispersion nach Anspruch 2, dadurch gekennzeichnet, daß das Alkylacrylat eine Alkylgruppe mit 1 bis 8 Kohlenstoffatomen besitzt.

4. Kalkdispersionsanstrich nach Anspruch 3, dadurch gekennzeichnet, daß das Alkylacrylat eine Alkylgruppe mit 1 bis 4 Kohlenstoffatomen besitzt.

5. Kalkanstrichdispersion nach einem der Ansprüche 1 bis 4, dadurch gekennzeichnet, daß das nichtionogene ethylenische Monomer ein Vinylaromat, ein Alkylmethacrylat oder Acrylnitril ist.

6. Kalkanstrichdispersion nach Anspruch 5, dadurch gekennzeichnet, daß das nicht-ionogene ethylenische Monomer Styrol ist.

7. Kalkanstrichdispersion nach einem der Ansprüche 1 bis 6, dadurch gekennzeichnet, daß das Copolymere von Alkylacrylat und nicht-ionogenem ethylenischem Monomer einen Glasübergangspunkt zwischen −5 und +25°C aufweist.

8. Kalkanstrichdispersion nach einem der Ansprüche 1 bis 7, dadurch gekennzeichnet, daß das Bindemittel 20 bis 60 Gew.% Trockensubstanz mit einem Partikel-Durchmesser zwischen 0,05 und 0,5 Mikron enthält.

9. Kalkanstrichdispersion nach einem der Ansprüche 1 bis 8, dadurch gekennzeichnet, daß der Luftkalk einen Hydraulizitätsindex unter 0,015 aufweist.

10. Kalkanstrichdispersion nach Anspruch 9, dadurch gekennzeichnet, daß der Luftkalk einen Hydraulizitätsindex von 0,007 aufweist.

11. Kalkanstrichdispersion nach einem der vorangehenden Ansprüche, dadurch gekennzeichnet, daß die Mengen ihrer verschiedenen Bestandteile so sind, daß die Pigment-Konzentration zwischen 15 und 80 Vol.% beträgt.

12. Kalkanstrichdispersion nach Anspruch 11, dadurch gekennzeichnet, daß die Pigment-Konzentration zwischen 40 und 70 Vol.% beträgt.

13. Kalkanstrichdispersion nach einem der vorangehenden Ansprüche, dadurch gekennzeichnet, daß sie enthält:
zwischen 10 und 850 Gew.% Kalk, bezogen auf das Gewicht des Trockenextrakts des Bindemittels,
zwischen 0,1 und 2 Gew.% D-Sorbitol, bezogen auf das Gewicht des Kalks,
zwischen 45 und 85 Gew.% Trockensubstanz.

14. Kalkanstrichdispersion nach Anspruch 13, dadurch gekennzeichnet, daß das Gewicht des Kalks, bezogen auf das Gewicht der Trockensubstanz des Bindemittels, zwischen 40 und 320%, und das Gewicht des D-Sorbitols, bezogen auf das Gewicht des Kalks, zwischen 0,5 und 1,5% beträgt.

## Claims

1. A paint dispersion containing lime in an aqueous medium based on a binding agent, powder materials and additives for aqueous paint in dispersion form, said paint dispersion being characterised in that:

. the binding agent is formed by a film-forming copolymer of alkyl acrylate and a non-ionogenic ethylenic monomer in dispersion within a stable aqueous medium with a basic pH-value, said non-ionogenic ethylenic monomer being such that the homopolymer corresponding to said non-ionogenic ethylenic monomer has a vitreous transition point of between 70 and 170°C;

. the powder materials contain besides one or more pigments a slaked airy lime having a low index of hydraulicity; and

. the additives are selected from those which are stable with a basic pH-value and comprise inter alia a stabilising agent formed by D-sorbitol.

2. A paint dispersion containing lime according to claim 1 characterised in that the alkyl acrylate is such that the corresponding homopolymer has a vitreous transition point of between +10°C and −60°C.

3. A paint dispersion containing lime according to claim 2 characterised in that the alkyl acrylate has an alkyl group containing from 1 to 8 carbon atoms.

4. A paint dispersion containing lime according to claim 3 characterised in that the alkyl acrylate has an alkyl group containing from 1 to 4 carbon atoms.

5. A paint dispersion containing lime according to any one of the preceding claims characterised in that the non-ionogenic ethylenic monomer is a vinyl aromatic monomer, an alkyl methacrylate or acrylonitrile.

6. A paint dispersion containing lime according to claim 5 characterised in that the non-ionogenic ethylenic monomer is styrene.

7. A paint dispersion containing lime according to any one of the preceding claims characterised in that the copolymer of alkyl acrylate and non-ionogenic ethylenic monomer has a vitreous transition point of between −5°C and +25°C.

8. A paint dispersion containing lime according to any one of the preceding claims characterised in that the binding agent contains from 20 to 60% by weight of dry matter with a particle diameter of between 0.05 and 0.5 micron.

9. A paint dispersion containing lime according to any one of the preceding claims characterised in that the airy lime has an index of hydraulicity of lower than 0.015.

10. A paint dispersion containing lime according to claim 9 characterised in that the airy lime has an index of hydraulicity of 0.007.

11. A paint dispersion containing lime according to any one of the preceding claims characterised in that the amounts of the various components thereof are such that the pigment concentration by volume is from 15 to 80%.

12. A paint dispersion containing lime according to claim 11 characterised in that the pigment concentration by volume is from 40 to 70%.

13. A paint dispersion containing lime according to any one of the preceding claims characterised in that it contains:

. from 10 to 850% by weight of lime with respect to the weight of dry extract of binding agent;
. from 0.1 to 2% by weight of D-sorbitol with respect to the weight of lime; and
. from 45 to 85% by weight of dry extract.

14. A paint dispersion containing lime according to claim 13 characterised in that the weight of lime with respect to the weight of dry extract of the binding agent is from 40 to 320% and the weight of D-sorbitol with respect to the weight of lime is from 0.5 to 1.5%.